# EUROPÄISCHE PATENTSCHRIFT

(11) **EP 1 391 619 B1**
(45) Veröffentlichungstag und Bekanntmachung des Hinweises auf die Patenterteilung: **28.04.2010**
(21) Anmeldenummer: 03017513.7
(22) Anmeldetag: 05.08.2003
(51) Int. Cl.: F16C 11/06, F16J 3/04

(54) **Kugelgelenk**
Ball joint
Joint à rotule

(30) Priorität: 12.08.2002 DE 20212385 U
(43) Veröffentlichungstag der Anmeldung: 25.02.2004
(73) Patentinhaber: TRW Fahrwerksysteme GmbH & Co. KG, 40547 Düsseldorf (DE)
(72) Erfinder: Bernhardt, Peter, 42349 Wuppertal (DE)
(74) Vertreter: Prinz & Partner

(56) Entgegenhaltungen:
- EP-A- 1 010 905
- EP-A- 1 193 159
- EP-A- 1 318 317
- DE-A1- 4 413 664
- DE-B1- 1 575 431

## Beschreibung

Die Erfindung betrifft ein Kugelgelenk mit einem Gehäuse, einem Kugelzapfen und einem Dichtungsbalg, der an dem Gehäuse und dem Kugelzapfen anliegt, um zwischen diesen abzudichten, wobei der Kugelzapfen eine Haltefläche aufweist, an der eine Dichtungsfläche des Dichtungsbalgs anliegt.

Nach dem Stand der Technik wird der Dichtungsbalg zapfenseitig in eine Nut eingelegt und mittels eines Spannrings befestigt und gehalten. Die hierfür erforderliche Zapfennut wurde bisher durch einen separaten Arbeitsgang hergestellt, beispielsweise durch Zerspanen, Rollieren oder ähnliches.

Aus der DE-A-44 13 664 ist ein Kugelgelenk der eingangs genannten Art bekannt, bei dem der Dichtungsbalg mit einem in axialer Richtung vorstehenden, nachgiebigen Randwulst versehen ist, der radial außerhalb der Dichtungsfläche des Dichtungsbalgs angeordnet ist. Diese Dichtungsfläche legt sich bei der Montage des Kugelgelenks an eine zugeordnete Fläche des Bauteils an, an dem das Kugelgelenk angebracht wird.

Ein ähnliches Kugelgelenk zeigt die DE-A-1 575 431 und die DE-A-201 20 096.

Die Aufgabe der Erfindung besteht darin, ein Kugelgelenk der eingangs genannten Art dahingehend weiterzubilden, daß sich geringere Herstellungskosten und eine verbesserte Abdichtung ergeben.

Zu diesem Zweck ist erfindungsgemäß vorgesehen, daß die Dichtungsfläche im unverformten Zustand, betrachtet entlang der Längsachse des Kugelzapfens, länger ist als die Haltefläche. Die Erfindung beruht auf dem Grundgedanken, die erforderliche Vorspannung zwischen dem Dichtungsbalg und dem Kugelzapfen dadurch zu erzeugen, daß die Dichtungsfläche des Dichtungsbalgs bei der Montage des Kugelzapfens an seinem späteren Bestimmungsort in axialer Richtung zusammengedrückt wird. Der Begriff "unverformter Zustand" bezieht sich dabei auf den Ruhezustand vor der Montage im Fahrzeug. Es ist erfindungsgemäß nicht unbedingt ein Spannring erforderlich, der den Dichtungsbalg auf dem Kugelzapfen festspannt. Die Kugelzapfennut, die bisher aufwendig hergestellt werden mußte, kann auch eingespart werden. Weiterhin ergibt sich ein vereinfachter Montageprozeß, da der Dichtungsbalg nicht mehr definiert in der Nut im Zapfen positioniert werden muß, sondern lediglich auf die Haltefläche aufgeschoben werden muß.

Gemäß der bevorzugten Ausführungsform der Erfindung ist vorgesehen, daß die Haltefläche und die Dichtungsfläche zylindrisch sind. Eine zylindrische Haltefläche läßt sich mit geringem Aufwand herstellen.

Vorzugsweise ist vorgesehen, daß sich an die Zapfen-Haltefläche auf ihrer vom Gehäuse abgewandten Seite eine Anlagefläche für ein Bauteil anschließt, an dem der Kugelzapfen angebracht werden kann. Auf diese Weise wird bei der Montage eine zusätzliche definierte axiale Vorspannung des Dichtungsbalgs auf dem Kugelzapfen erreicht, da die Endposition des Zapfens am Bauteil durch die Anlagefläche genau definiert ist. Hierdurch wird zusätzlich eine Dichtwirkung in axialer Richtung erzielt, die eine Verbesserung gegenüber den herkömmlichen Radialnutabdichtungen darstellt.

Es kann vorgesehen sein, daß der Dichtungsbalg mit einem Metallring versehen ist, der die Dichtungsfläche gegen die Haltefläche beaufschlagt. Auf diese Weise läßt sich die radiale Vorspannung variieren.

Die Erfindung wird nachfolgend anhand einer bevorzugten Ausführungsform beschrieben, die in den beigefügten Zeichnungen dargestellt ist. In diesen zeigen:
- Figur 1 in einer Schnittansicht ein erfindungsgemäßes Kugelgelenk vor der Montage an einem Bauteil; und
- Figur 2 in einer Schnittansicht das Kugelgelenk von Figur 1 montiert an einem Bauteil.

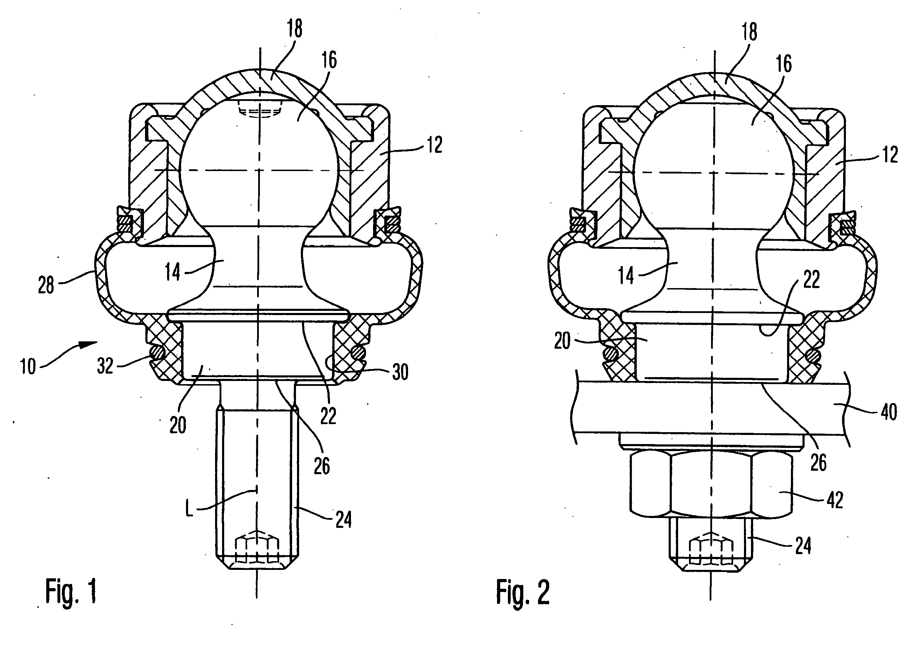

In Figur 1 ist ein Kugelgelenk 10 gezeigt, das als wesentliche Bauteile ein Gehäuse 12 und einen Kugelzapfen 14 aufweist. Der Kugelzapfen 14 weist einen Kugelkopf 16 auf, der in einer Schale 18 angeordnet ist, die wiederum im Gehäuse 12 festgelegt ist. Der Kugelzapfen 14 weist weiterhin eine zylindrische Haltefläche 20 auf, die zum Kugelkopf 16 hin von einem Absatz 22 begrenzt wird, sowie ein Gewinde 24. Zwischen dem Gewinde 24 und der Haltefläche 20 ist eine Anlagefläche 26 gebildet.

Es ist ein Dichtungsbalg 28 vorgesehen, der an seiner bezüglich Figur 1 oberen Seite am Gehäuse 12 angebracht ist. An seiner bezüglich Figur 1 unteren Seite ist der Dichtungsbalg 28 mit einer zylindrischen Dichtungsfläche 30 versehen, die auf der Haltefläche 20 des Kugelzapfens 14 angeordnet ist. Wie in Figur 1 zu sehen ist, steht die Dichtungsfläche 30 in bezüglich der Längsachse L des Kugelzapfens axialer Richtung geringfügig über die Haltefläche 20 hinaus, da sie, in axialer Richtung betrachtet, länger als die Haltefläche 20 ist. Der Dichtungsbalg ist mit einem Metallring 32 versehen, der die Dichtungsfläche 30 des Dichtungsbalgs 28 gegen die Haltefläche 20 des Kugelzapfens 14 beaufschlagt.

In Figur 2 ist das Kugelgelenk 10 angebracht an einem Bauteil 40 gezeigt, das beispielsweise ein Teil eines Fahrwerks für ein Kraftfahrzeug ist. Der Kugelzapfen 14 ist mit seinem Gewinde 24 durch das Bauteil 40 hindurchgesteckt und an diesem mittels einer Mutter 42 befestigt. Dabei liegt das Bauteil 40 an der Anlagefläche 26 des Kugelzapfens 14 an. Bei der Montage wird der auf der Haltefläche 20 angeordnete Teil des Dichtungsbalgs 28 in axialer Richtung komprimiert, da er vom Bauteil 40 gegen den Absatz 22 am Kugelzapfen 14 gedrückt wird. Dabei wird auch die Dichtungsfläche 30 des Dichtungsbalgs 28 fest gegen die Haltefläche 20 gedrückt, so daß eine zuverlässige Abdichtung gewährleistet ist.

Die Abmessungen des Dichtungsbalgs 28 sind so gewählt, daß der auf der Haltefläche 20 angeordnete Abschnitt des Dichtungsbalgs nicht von der Haltefläche 20 in Richtung des Gewindes 24 abrutschen kann, solange das Kugelgelenk 10 nicht an einem Bauteil montiert ist und dadurch der entsprechende Abschnitt des Dichtungsbalgs gehalten ist.

## Patentansprüche

1. Kugelgelenk mit einem Gehäuse (12), einem Kugelzapfen (14) und einem Dichtungsbalg (28), der an dem Gehäuse und dem Kugelzapfen anliegt, um zwischen diesen abzudichten, wobei der Kugelzapfen eine Haltefläche (20) aufweist, an der eine Dichtungsfläche (30) des Dichtungsbalgs (28) anliegt, **dadurch gekennzeichnet, dass** die Dichtungsfläche (30) so bemessen ist, dass sie im unverformten Zustand, betrachtet entlang der Längsachse des Kugelzapfens, länger als die Haltefläche (20) ist, und dass sie im montierten Zustand auf die Länge der Haltefläche (20) komprimiert wird.

2. Kugelgelenk nach Anspruch 1, **dadurch gekennzeichnet, daß** die Haltefläche (20) und die Dichtungsfläche (30) zylindrisch sind.

3. Kugelgelenk nach Anspruch 1 oder Anspruch 2, **dadurch gekennzeichnet, daß** sich an die Haltefläche (20) auf ihrer vom Gehäuse (12) abgewandten Seite eine Anlagefläche (26) für ein Bauteil (40) anschließt, an dem der Kugelzapfen (14) angebracht werden kann.

4. Kugelgelenk nach einem der vorhergehenden Ansprüche, **dadurch gekennzeichnet, daß** der Dichtungsbalg (28) mit einem Metallring (32) versehen ist, der die Dichtungsfläche (30) gegen die Haltefläche (20) beaufschlagt.

5. Kugelgelenk nach einem der vorhergehenden Ansprüche, **dadurch gekennzeichnet, dass** eine Mantelumfangsfläche des Dichtungsbalgs (28) in axialer Richtung des Kugelzapfens (14) so kurz bemessen ist, dass der Dichtungsbalg (28) auf der Haltefläche (20) gehalten ist, wenn das Kugelgelenk (10) nicht an einem Bauteil (40) angebracht ist.

## Claims

1. A ball joint comprising a housing (12), a ball pin (14) and a sealing bellows (28), which lies against the housing and the ball pin in order to seal between them, the ball pin having a holding surface (20) against which a sealing surface (30) of the sealing bellows (28) lies, **characterized in that** the sealing surface (30) is dimensioned such that in the non-deformed state, viewed along the longitudinal axis of the ball pin, it is longer than the holding surface (20) and that, in the mounted state, it is compressed to the length of the holding surface (20).

2. The ball joint according to claim 1, **characterized in that** the holding surface (20) and the sealing surface (30) are cylindrical.

3. The ball joint according to claim 1 or claim 2, **characterized in that** adjoining the holding surface (20) on its side facing away from the housing (12), there is a contact surface (26) for a component (40) to which the ball pin (14) can be fitted.

4. The ball joint according to any of the preceding claims, **characterized in that** the sealing bellows (28) is provided with a metal ring (32) which urges the sealing surface (30) against the holding surface (20).

5. The ball joint according to any of the preceding claims, **characterized in that** a lateral peripheral surface of the sealing bellows (28) in the axial direction of the ball pin (14) is dimensioned to be so short that the sealing bellows (28) is held on the holding surface (20) when the ball joint (10) is not fitted to a component (40).

## Revendications

1. Joint sphérique comportant un boîtier (12), un pivot sphérique (14) et un soufflet d'étanchéité (28) en appui contre le boîtier et le pivot sphérique pour un étanchement entre ceux-ci, le pivot sphérique présentant une surface de retenue (20) contre laquelle une surface d'étanchéité (30) du soufflet d'étanchéité (28) est en appui, **caractérisé en ce que** la surface d'étanchéité (30) est dimensionnée de telle sorte qu'à l'état non déformé, selon une vue le long de l'axe longitudinal du pivot sphérique, elle soit plus longue que la surface de retenue (20) et qu'à l'état monté, elle soit comprimée à la longueur de la surface de retenue (20).

2. Joint sphérique selon la revendication 1, **caractérisé en ce que** la surface de retenue (20) et la surface d'étanchéité (30) sont cylindriques.

3. Joint sphérique selon la revendication 1 ou la revendication 2, **caractérisé en ce qu'**une surface d'appui (26) pour un composant (40) sur lequel le pivot sphérique (14) peut être monté se raccorde à la surface de retenue (20) sur son côté détourné du boîtier (12).

4. Joint sphérique selon l'une des revendications précédentes, **caractérisé en ce que** le soufflet d'étanchéité (28) est pourvu d'une bague métallique (32) sollicitant la surface d'étanchéité (30) contre la surface de retenue (20).

5. Joint sphérique selon l'une des revendications précédentes, **caractérisé en ce qu'**une surface latérale périphérique du soufflet d'étanchéité (28) est dimensionnée en direction axiale du pivot sphérique (14) de manière à être si courte que le soufflet d'étanchéité (28) est maintenu sur la surface de retenue (20) lorsque le joint sphérique (10) n'est pas monté sur un composant (40).
